# EUROPÄISCHE PATENTSCHRIFT

(11) **EP 2 851 972 B1**
(45) Veröffentlichungstag und Bekanntmachung des Hinweises auf die Patenterteilung: **28.11.2018**
(21) Anmeldenummer: 14183767.4
(22) Anmeldetag: 05.09.2014
(51) Int. Cl.: H01M 2/06, H01M 2/34, H01M 10/0525, H01M 10/058, H01M 10/48, H01M 2/08

(54) **Lithium-Ionen-Akkumulator mit verringerter Gefährdung durch Abblasen**
Lithium-ion battery with reduced gas escape hazard
Batterie au lithium-ion avec risque réduit d'emission de gaz

(30) Priorität: 20.09.2013 DE 102013218933
(43) Veröffentlichungstag der Anmeldung: 25.03.2015
(73) Patentinhaber: ROBERT BOSCH GMBH, 70442 Stuttgart (DE)
(72) Erfinder: Fetzer, Joachim, 73342 Bad-Ditzenbach (DE); Reitzle, Alexander, 89231 Neu-Ulm (DE); Angerbauer, Ralf, 71696 Moeglingen (DE)

(56) Entgegenhaltungen:
- EP-A2- 2 187 472
- WO-A2-2013/120666

## Beschreibung

### Stand der Technik

Zellen von Lithium-Ionen-Akkumulatoren umfassen üblicherweise eine erste und eine zweite Elektrode, die mit einer Trennschicht voneinander getrennt sind. Die Trennschicht verhindert den Elektronenübergang zwischen den Elektroden, lässt jedoch Ionen zwischen den Elektroden passieren. Solche Zellen können sich unter verschiedenen Umständen stark erhitzen, beispielsweise infolge Überladung, mechanischer Überbeanspruchung oder Beschädigung, insbesondere des Zellengehäuses, zum Beispiel durch einen Unfall eine Fahrzeugs, in das eine solche Zelle eingebaut ist, bei unbeabsichtigten Kurzschlüssen, zum Beispiel durch Kontakt zwischen spannungsführenden Komponenten des Lithium-Ionen-Akkumulators oder daran angeschlossenen Einheiten. Durch die starke Erhitzung kann die Trennschicht zwischen den Elektroden erweichen oder schmelzen, so dass ein elektrischer Kurzschluss zwischen den Elektroden auftreten kann. Dadurch kommt es zu einer Entladung der Zelle über einen solchen Kurzschluss, wobei an dem Innenwiderstand der Kurzschlussstelle Energie des Entladungsstroms als Wärme freigesetzt wird. Dies führt zu einer weiteren Erhitzung der Stelle, wodurch das Material der Trennschicht thermisch und/oder chemisch zersetzt werden kann, wodurch insbesondere Gas freigesetzt wird, was als Ausgasen bezeichnet wird. Einige der genannten Vorgänge können exotherme Reaktionen sein, wodurch die Temperatur an einer Kurzschlussstelle in der Trennschicht weiter erhöht werden kann. Dadurch und durch Schmelzen der Trennschicht kann es zusätzlich zu einer Zunahme der Größe des Kurzschlussbereichs kommen, was mehr Stromfluss und mehr Wärmefreisetzung bewirkt. Gegebenenfalls baut sich explosionsartig Druck auf. Üblicherweise sind Lithium-Ionen-Zellen in ein Gehäuse eingebaut, das durch einen solchen Druck bersten könnte. Als Gegenmaßnahme ist im Allgemeinen in dem Gehäuse ein Berstventil vorgesehen, das bei einem Überdruck öffnet. So können entstandene Gase entweichen und ein weiterer Druckanstieg innerhalb des Gehäuses verhindert werden. Dies wird als Abblasen bezeichnet. Die Trennschicht kann ein Leitsalz umfassen, das in einem Ausführungsbeispiel fluorhaltig ist. Beim Abblasen treten Flüssigkeiten, Dämpfe und/oder Gase aus, die unzersetzte Elektrolytkomponenten wie Dimethylcarbonat (DMC) oder Ethylencarbonat (EC), brennbare Zersetzungsprodukte wie etwa Kohlenmonoxid (CO), Wasserstoff (H₂), Methan (CH₄), oder reaktive Zersetzungsprodukte eines Leitsalzes, wie etwa Fluorwasserstoff (HF) oder Phosphoroxytrifluorid (POF₃) enthalten. Aufgrund der toxischen Bestandteile dieser Stoffe kann die Gesundheit von in der Nähe befindlichen Lebewesen gefährdet werden.

WO 2013/120666 A2 zeigt ein Verfahren zum Herstellen einer elektrochemischen Zelle, aufweisend einen Deckelkörper, einen Gehäusekörper und ein Kontaktierungsmittel.

In EP 2 187 472 A2 ist ein Lithium-Ionen-Akkumulator mit einem Temperatursensor gezeigt.

### Offenbarung der Erfindung

Um die vorgenannten Nachteile auszuräumen, wird erfindungsgemäß vorgeschlagen, im Falle des Verlusts oder der Verringerung der Isolierwirkung durch die Trennschicht eine zweite Verbindung zwischen den beiden Elektroden zu schaffen, um damit zu bewirken, dass der Kurzschlussstrom zwischen den Elektroden möglichst über diese zusätzlich geschaffene Verbindung fließt. Dadurch wird die als Wärme beim Entladen des Akkumulators freigesetzte Energie nicht vollständig an dem Kurzschluss in der Trennschicht freigesetzt, sondern zu einem möglichst großen Teil in der zusätzlich geschaffenen Verbindung zwischen den Elektroden, an der die entstehende Wärme vorzugsweise gut abgeführt werden kann und/oder weniger konzentriert frei wird, sodass geringere Temperaturen entstehen. Zugleich wird der Temperaturerhöhung an der Kurzschlussstelle in der Trennschicht durch geringeren Stromfluss an dieser Stelle entgegengewirkt, wodurch die Ausbreitung des Kurzschlusses in der Trennschicht und die Freisetzung schädlicher Stoffe gebremst und bestenfalls ein explosionsartiges Abblasen verhindert wird.

Die Anschlussisolierung ist um den Anschluss herum angeordnet. Die erste Elektrode kann die Anode oder die Kathode des Akkumulators sein, wobei die zweite Elektrode zu der ersten Elektrode komplementär ist. Die erfindungsgemäß zusätzlich zum Kurzschluss in der Trennschicht hergestellte elektrische Verbindung zwischen den Elektroden weist einen Widerstand auf, der vorzugsweise kleiner als der Innenwiderstand der Kurzschlussstelle in der Trennschicht ist. Denkbar ist, dass der Widerstand der zusätzlich geschaffenen Verbindung mittels des durch sie stattfindenden Stromflusses sinkt. Denkbar ist weiter, den Akkumulator über die zusätzlich geschaffene Verbindung langsam zu entladen. Da über den Kurzschluss in der Trennschicht u.U. nur wenig Strom fließt, der aber zu hohen Temperaturen führt, kann der Akkumulator insgesamt langsam mit einem Ladestrom entladen werden, der erheblich größer als der Kurzschlussstrom ist. Durch das entsprechend kleine Widerstandsverhältnis des Entladewiderstands in der zusätzlichen Verbindung zu dem Kurzschlusswiderstand in der Trennschicht kann der Stromfluss über den Kurzschluss verringert werden. Besonders bevorzugt wird die weitere Freisetzung von Gas durch das Schaffen der zusätzlichen Verbindung verhindert oder zumindest verringert.

Erfindungsgemäß umfasst der Lithium-Ionen-Akkumulator eine erste Elektrode und eine zweite Elektrode, die mittels einer elektrisch isolierenden und von Ionen durchdringbaren Trennschicht voneinander getrennt sind, wobei die erste Elektrode elektrisch mit einem Elektrodenanschluss verbunden ist, der von der zweiten Elektrode mittels einer Anschlussisolierung elektrisch isoliert ist, wobei bei einer Verringerung der Isolierwirkung der Trennschicht auch die Isolierwirkung der Anschlussisolierung verringerbar oder zerstörbar und dadurch eine elektrische Verbindung zwischen der ersten Elektrode und der zweiten Elektrode über den Elektrodenanschluss herstellbar ist, sodass der Lithium-Ionen-Akkumulator über diese elektrische Verbindung entladbar ist, wobei bei dem Lithium-Ionen-Akkumulator die Isolierwirkung der Anschlussisolierung mittels eines Heizelements verringerbar oder zerstörbar ist, wobei bei dem Lithium-Ionen-Akkumulator die Anschlussisolierung einen Kunststoff als Isoliermaterial umfasst, wobei der Lithium-Ionen-Akkumulator ein zumindest abschnittsweise elektrisch leitfähiges Gehäuse aufweist, in dessen Inneren die erste und die zweite Elektrode angeordnet sind, wobei die zweite Elektrode über einen elektrischen Verbinder elektrisch leitend mit dem Gehäuse verbunden ist und sich der Elektrodenanschluss vom Inneren des Gehäuses bis zum Äußeren des Gehäuses erstreckt, wobei der Elektrodenanschluss mittels der Anschlussisolierung von dem Gehäuse elektrisch isoliert ist, wobei der Lithium-Ionen-Akkumulator einen Sensor zur Erfassung der Verringerung der Isolationswirkung der Trennschicht oder eines Ausgasens der Trennschicht aufweist, wobei der Lithium-Ionen-Akkumulator eine Zellüberwachungseinrichtung aufweist, wobei die Zellüberwachungseinrichtung eingerichtet ist, den Sensor auszuwerten.

Die Unteransprüche zeigen bevorzugte Weiterbildungen der Erfindung.

In einer Ausführungsform des Lithium-Ionen-Akkumulators sind die erste und die zweite Elektrode in einem Gehäuse angeordnet. Dieses ist zumindest abschnittsweise elektrisch leitfähig. Besonders bevorzugt umfasst es einen Metallbecher. Um zu erreichen, dass sich zwischen dem Behälter und den Elektroden keine elektrochemische Spannung aufbaut, ist das Gehäuse typischerweise mit einer der Elektroden verbunden. Häufig ist ein externer Anschluss dieser Elektrode als elektrisches Anschlusselement am Äußeren des Gehäuses ausgeführt. Vorzugsweise umschließt das Gehäuse die Elektroden und die Trennschicht vollständig. Wenn die zweite Elektrode elektrisch leitend mit dem Gehäuse verbunden ist, ist es im Allgemeinen erforderlich, einen Anschluss an die erste Elektrode aus dem Gehäuse herauszuführen. Dazu ist deren Elektrodenanschluss an der Durchführungsstelle durch das Gehäuse zu diesem elektrisch isoliert. Die zusätzliche elektrische Verbindung zwischen den beiden Elektroden des Akkumulators kann bewirkt werden, indem diese Isolierung des Elektrodenanschlusses überbrückt oder so zerstört oder verändert wird, dass die Isolierwirkung nachlässt oder zusammenbricht, wodurch die zusätzliche Verbindung geschaffen wird.

In einer Ausführungsform des Akkumulators wird eine Auswirkung davon genutzt, dass elektrische Energie aus dem Akkumulator an einem Kurzschluss in der Trennstelle in Wärme umgesetzt wird. Die damit verbundene Gasentwicklung aus der Trennschicht baut Druck auf und transportiert Wärme entlang des Strömungspfades von Gas, das von der Kurzschlussstelle ausgast. Außerdem kann dieses Gas u.U. eine chemische Wirkung entwickeln. Diese Auswirkungen können genutzt werden, um die zusätzliche Verbindung zwischen den Elektroden zu bewirken, indem die Anschlussisolierung thermisch, pneumatisch und/oder chemisch angegriffen wird. Insbesondere kann erhöhte Temperatur und/oder erhöhter Druck dazu führen, dass die Anschlussisolierung aufgelöst wird, schmilzt, zerfällt oder sich so verändert, dass sie leitfähig wird oder dergleichen. Vorzugsweise findet dies ab einer definierten Temperatur und/oder einem definierten erhöhten Druck statt. Insbesondere in den Fällen der Auflösung, des Schmelzens oder Zerfallens der Isolierung kann es vorteilhaft sein, wenn der Elektrodenanschluss in Richtung eines Leiters mit dem Potential der zweiten Elektrode vorgespannt ist, so dass bei einer Erweichung oder einem wenigstens teilweisen Verschwinden der Isolierung eine Berührung zwischen Elektrodenanschluss und dem mit der zweiten Elektrode verbundenen Leiter stattfindet, um die zusätzliche Verbindung herzustellen.

Der Lithium-Ionen-Akkumulator weist einen Sensor auf, mit dem erfasst werden kann, dass sich die Isolationswirkung der Trennschicht zwischen den Elektroden verringert hat. Dazu kann beispielsweise der Innenwiderstand der Zelle gemessen werden, was anhand einer Messung der Zellenspannung und einer Messung von Strom durch die Zelle erreicht werden kann. Alternativ oder zusätzlich kann ein Temperatursensor und/oder ein Drucksensor verwendet werden, mit dem die Temperatur und/oder der Druck im Inneren des Behälters gemessen werden kann. Weiter ist die Verwendung eines Beschleunigungssensors denkbar, mit dessen Hilfe ein Unfall eines Fahrzeugs detektiert werden kann, in dem der Lithium-Ionen-Akkumulator eingesetzt ist. So kann nach einem Unfall ein definiertes Entladen des Lithium-Ionen-Akkumulators mittels der zusätzlichen Verbindung bewirkt werden. Um ein gezieltes Entladen über die zusätzliche Verbindung zu bewirken, kann die Anschlussisolierung durch extern bewirkte Einwirkung zerstört werden. Die gemessenen Werte können jeweils mit Schwellenwerten verglichen werden, um festzustellen, ob ein Kurzschluss in der Trennschicht vorliegt.

Der Sensor kann Teil einer Zellüberwachungseinrichtung sein, welche wiederum Teil des Lithium-Ionen-Akkumulators sein kann. Denkbar ist weiter, einen Sensor räumlich getrennt von der Zellüberwachungseinrichtung vorzusehen, während beispielsweise die Zellüberwachungseinrichtung oder eine andere Instanz die Auswertung des Sensors übernimmt. Mit Hilfe der Messwerte und Informationen über den Zustand der Zelle oder des Fahrzeugs kann die Herstellung der zusätzlichen Verbindung zwischen den Elektroden aktiv bewirkt werden.

Die Isolierwirkung der Anschlussisolierung ist mittels eines Heizelements verringerbar oder zerstörbar. Insbesondere ist das Heizelement ein elektrisches Heizelement, das auf die Erkennung eines kritischen Zustands der Zelle oder des Fahrzeugs hin elektrisch aktivierbar ist. Durch die Wärme aus dem Heizelement kann die Isolierung geschmolzen, zersetzt oder verändert werden oder dergleichen.

In einer Ausführungsform des Lithium-Ionen-Akkumulators ist das Heizelement als ein Heizdraht ausgebildet. In einer weiteren Ausführungsform ist das Heizelement, insbesondere der Heizdraht, in die Anschlussisolierung eingebettet. Auf diese Weise kann schnell und gezielt die Isolierwirkung der Anschlussisolierung verringert oder beseitigt werden.

Die Anschlussisolierung umfasst einen Kunststoff als Isoliermaterial. Der Kunststoff ist somit zwischen Elementen angeordnet, die das Potential der ersten Elektrode bzw. das Potential der zweiten Elektrode führen, und isoliert diese elektrisch gegeneinander. Der Kunststoff ist elektrisch nichtleitend. Vorzugsweise zersetzt er sich bei erhöhter Temperatur oder ist bei erhöhter Temperatur schmelzbar oder wird bei erhöhter Temperatur elektrisch leitfähig oder dergleichen. Ein solcher Kunststoff ist zur Herstellung der zusätzlichen Verbindung nach der Erfindung gut geeignet.

In einer weiteren Ausführungsform verliert der als Isolierstoff eingesetzte Kunststoff seine Isolierwirkung bei einer vordefinierten Temperatur. Bei dieser Temperatur ist der Kunststoff beispielsweise schmelzbar, auflösbar oder sein Zerfall auslösbar, oder er ist anderweitig zerstörbar oder chemisch veränderbar, insbesondere dahingehend, dass der Kunststoff elektrisch leitfähig wird oder zerfällt oder weich wird, sodass er leichter entfernt werden kann.

In einem weiteren Aspekt der vorliegenden Erfindung wird ein Verfahren zur Verringerung der Gefährdung durch einen Lithium-Ionen-Akkumulator nach einem der vorstehend beschriebenen Ansprüche vorgeschlagen. Bei dem Verfahren wird im Falle eines Kurzschlusses zwischen der ersten und der zweiten Elektrode im Bereich der Trennschicht eine weitere Verbindung zwischen der ersten und der zweiten Elektrode geschaffen, um den Lithium-Ionen-Akkumulator über diese Verbindung zu entladen, insbesondere verstärkt zu entladen. Die Isolationswirkung der Trennschicht kann beispielsweise durch einen Kurzschluss zwischen der ersten und der zweiten Elektrode gestört sein. Damit kann eine Gaserzeugung verbunden sein, die beispielsweise den Druck im Inneren eines Behälters, in dem die Elektroden und die Trennschicht angeordnet sind, erhöht. In einem Ausführungsbeispiel des Verfahrens kann der Widerstand der zusätzlichen Verbindung mit zunehmendem Stromfluss darüber und damit einhergehender Erwärmung und/oder durch fortgesetztes Heizen mit einem Heizelement im Vergleich zu einem Anfangszustand der Verbindungsherstellung abnehmen.

Eine Temperatur- und/oder Druckeinwirkung bewirkt eine Verringerung der Isolierwirkung der Anschlussisolierung.

Beispielsweise kann Druck Teile der Isolierung mechanisch entfernen und/oder Temperatur die Isolierung schmelzen oder zersetzen. Weiter ist denkbar, dass Bestandteile von ausströmendem Gas die Anschlussisolierung chemisch verändern, beispielsweise leitfähig machen oder zersetzen, so dass die Reste der Isolierung leichter aus dem Isolierungsbereich gespült werden können.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Darstellung eines Querschnitts durch eine Ausführungsform eines Lithium-Ionen-Akkumulators nach der Erfindung in regulärem Betriebszustand,
- Figur 2: eine schematische Darstellung der Ausführungsform aus Figur 1 in demselben Querschnitt, wobei ein Kurzschluss in einer Trennschicht zwischen zwei Elektroden des Lithium-Ionen-Akkumulators aufgetreten ist, und
- Figur 3: eine schematische Darstellung derselben Ausführungsform wie in den Figuren 1 und 2 in demselben Querschnitt, wobei sich der Akkumulator in einem fortgeschrittenen Zustand oder einem Endzustand der Herstellung einer zusätzlichen Verbindung zwischen den Elektroden des Akkumulators befindet.

### Ausführungsformen der Erfindung

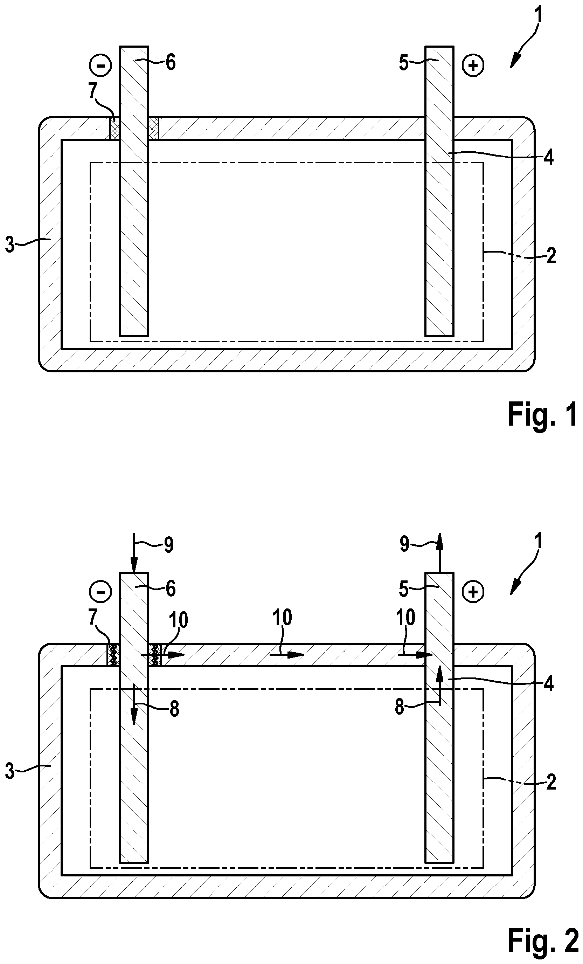

Figur 1 zeigt schematisch einen Querschnitt durch einen Lithium-Ionen-Akkumulator 1 nach der Erfindung in einem Querschnitt. Eine Lithium-Ionen-Zelle 2 ist im Inneren eines Gehäuses 3 angeordnet. Die elektrochemische Zelle umfasst bevorzugt eine sogenannte "Jelly Roll", welche einen Stapel aus einer ersten Elektrode, einer Trennschicht und einer zweiten Elektrode umfasst, die typischerweise zu einem Wickel aufgewickelt sind, so dass dieser eine kompakte Form aufweist. Das Gehäuse 3 umschließt die Zelle 2 im Normalbetrieb hermetisch dicht. Das Gehäuse ist zumindest teilweise aus einem elektrisch leitfähigen Werkstoff hergestellt. Die zweite Elektrode ist über einen Verbinder 4 mit dem Gehäuse 3 verbunden. Auf diese Weise ist das Potential der zweiten Elektrode auf das Gehäusepotential gelegt. Die zweite Elektrode bildet vorzugsweise den Pluspol des Akkumulators. Das Gehäuse 3 weist einen externen Anschluss 5 auf, mit dem das auf dem Gehäuse liegende Potential von außen kontaktiert werden kann. Die erste Elektrode ist mit einem Elektrodenanschluss 6 verbunden, der das Potential der ersten Elektrode vom Inneren des Gehäuses 3 zum Äußeren des Gehäuses 3 führt. An einer Durchtrittsstelle des Elektrodenanschlusses 6 durch das Gehäuse 3 ist eine Anschlussisolierung 7 angeordnet, die den Elektrodenanschluss 6 von dem Gehäuse 3 elektrisch isoliert. Die erste Elektrode kann über den Elektrodenanschluss 6 vom Äußeren des Gehäuses 3 aus kontaktiert werden. Die Elektroden und die Trennschicht sind in der Figur 1 nicht explizit dargestellt, jedoch von der Zelle 2 umfasst. Die Trennschicht zwischen den Elektroden ist in Figur 1 intakt, ebenso wie die Anschlussisolierung.

Figur 2 zeigt schematisch dieselbe Ausführungsform wie Figur 1 in demselben Querschnitt. In der Trennschicht zwischen den Elektroden der Zelle 2 hat sich ein Kurzschluss ereignet, der zu einer Temperaturerhöhung und/oder Druckerhöhung im Inneren des Behälters 3 geführt hat. Die Trennschicht gast aus. Die Temperatur- und/oder Druckerhöhung ist von einem Sensor erfasst worden und/oder wirkt auf die Anschlussisolierung 7 thermisch und pneumatisch sowie unter Umständen auch chemisch über Gase, die aus der Trennschicht freigesetzt werden, auch chemisch auf die Anschlussisolierung 7 ein. Die Anschlussisolierung 7 beginnt in der Figur 2 ihre Leitfähigkeit zu verlieren und einen beginnenden Kurzschluss zwischen dem Elektrodenanschluss 6 und dem Gehäuse 3 zu bilden. Dadurch ergibt sich ein Stromfluss 8 von der zweiten Elektrode über den Verbinder 4 durch das Gehäuse 3 über die wenigstens näherungsweise kurzgeschlossene Anschlussisolierung 7 in den Elektrodenanschluss 6 und von dort in die erste Elektrode. Über diesen Pfad kann die Lithium-Ionen-Zelle 2 entladen werden, vorzugsweise langsam. Der Kurzschluss in der Trennschicht wird auf diese Weise entlastet, so dass hier eine geringere Wärmeentwicklung und eine Verringerung der weiteren Zerstörung der Trennschicht bewirkt wird. Zusätzlich zu dem beschriebenen Entladestrom fließt über die teilweise zerstörte Anschlussisolierung 7 ein Strom 9 von dem externen Anschluss des Elektrodenanschlusses 6, der von einer externen Spannung zwischen dem externen Anschluss des Elektrodenanschlusses 6 und dem externen Anschluss 5 des Gehäuses 3 anliegt. Diese Spannung kann beispielsweise durch weitere Lithium-Ionen-Zellen bewirkt werden, mit denen die in der Figur 2 gezeigte Zelle in Reihe geschaltet ist. Ein Versagen der Zelle 2 in der Figur 2 durch Kurzschluss wird durch die Zerstörung der Anschlussisolierung 7 somit nach außen nicht wirksam. Vielmehr kann Strom, der sonst durch die Zelle 2 fließen würde, über die zerstörte Anschlussisolierung 7 direkt von dem Elektrodenanschluss 6 zu dem externen Anschluss des Gehäuses 3 fließen, wodurch die elektrochemische Zelle aus externer Sicht überbrückt ist.

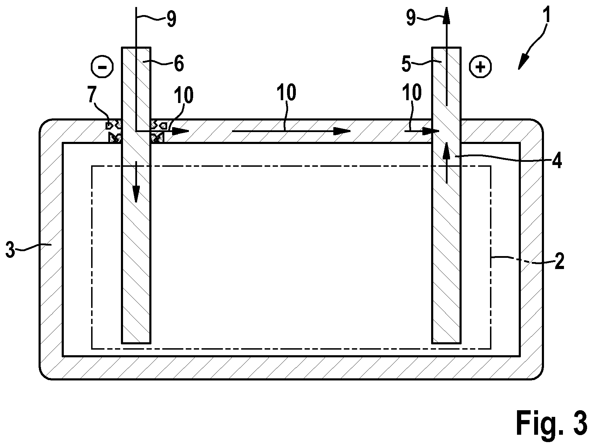

Figur 3 zeigt schematisch die Ausführungsform des Lithium-Ionen-Akkumulators aus den Figuren 1 und 2 in demselben Querschnitt. Im Unterschied zu Figur 2 ist die Anschlussisolierung 7 vollständig zerstört und bildet einen niederohmigen Kurzschluss. Dadurch ist der Stromfluss 10 von dem Elektrodenanschluss 6 zu dem Anschluss 5 des Gehäuses 3 bzw. dem Verbinder 4 zwischen dem Gehäuse und der zweiten Elektrode im Vergleich zu der Situation in Figur 2 erhöht. Es findet somit eine verstärkte Entladung statt, bis diese durch Erschöpfung des Akkumulators zum Erliegen kommt. Die Entladung kann insgesamt dennoch langsam vonstattengehen, insbesondere so langsam, dass der Kurschluss über die Anschlussisolierung keine Schäden oder Gefährdung durch Überhitzung dieser Stelle bewirkt. Der niederohmigere Kurzschluss der Anschlussisolierung 7 bewirkt außerdem, dass Strom von dem externen Anschluss des Elektrodenanschlusses 6 zu dem externen Anschluss 5 des Gehäuses 3 widerstandsärmer fließen kann. Somit behindert der Ausfall der elektrochemischen Zelle 2 den Stromfluss durch weitere, mit dieser elektrochemischen Zelle 2 in Reihe geschaltete elektrochemische Zellen vorzugsweise kaum oder nicht.

Der Stromfluss 10 stellt damit eine Überlagerung des externen Stroms von dem Elektrodenanschluss 6 zu dem Gehäuseanschluss 5 mit einem internen Entladestrom von der zweiten Elektrode über den Verbinder 4, das Gehäuse und den leitfähig gewordenen Bereich der Anschlussisolierung 7 über den Elektrodenanschluss 6 zur ersten Elektrode dar.

## Patentansprüche

1. Lithium-Ionen-Akkumulator (1) umfassend eine erste Elektrode und eine zweite Elektrode, die mittels einer elektrisch isolierenden und von Ionen durchdringbaren Trennschicht voneinander getrennt sind,
wobei die erste Elektrode elektrisch mit einem Elektrodenanschluss (6) verbunden ist, der von der zweiten Elektrode mittels einer Anschlussisolierung (7) elektrisch isoliert ist,
wobei bei einer Verringerung der Isolierwirkung der Trennschicht auch die Isolierwirkung der Anschlussisolierung (7) verringerbar oder zerstörbar und dadurch eine elektrische Verbindung zwischen der ersten Elektrode und der zweiten Elektrode über den Elektrodenanschluss (6) herstellbar ist, sodass der Lithium-Ionen-Akkumulator (1) über diese elektrische Verbindung entladbar ist,
**dadurch gekennzeichnet, dass**
bei dem Lithium-Ionen-Akkumulator (1) die Isolierwirkung der Anschlussisolierung (7) mittels eines Heizelements verringerbar oder zerstörbar ist,
wobei bei dem Lithium-Ionen-Akkumulator (1) die Anschlussisolierung (7) einen Kunststoff als Isoliermaterial umfasst,
wobei der Lithium-Ionen-Akkumulator (1) ein zumindest abschnittsweise elektrisch leitfähiges Gehäuse (3) aufweist, in dessen Inneren die erste und die zweite Elektrode angeordnet sind, wobei die zweite Elektrode über einen elektrischen Verbinder (4) elektrisch leitend mit dem Gehäuse (3) verbunden ist und sich der Elektrodenanschluss (6) vom Inneren des Gehäuses (3) bis zum Äußeren des Gehäuses (3) erstreckt, wobei der Elektrodenanschluss (6) mittels der Anschlussisolierung (7) von dem Gehäuse elektrisch isoliert ist,
wobei der Lithium-Ionen-Akkumulator (1) einen Sensor zur Erfassung der Verringerung der Isolationswirkung der Trennschicht oder eines Ausgasens der Trennschicht aufweist,
wobei der Lithium-Ionen-Akkumulator eine Zellüberwachungseinrichtung aufweist, wobei die Zellüberwachungseinrichtung eingerichtet ist, den Sensor auszuwerten.

2. Lithium-Ionen-Akkumulator (1) nach Anspruch 1, **dadurch gekennzeichnet, dass** bei dem Lithium-Ionen-Akkumulator (1) mittels einer Auswirkung der Verringerung der Isolationswirkung der Trennschicht, insbesondere eines Ausgasens der Trennschicht, auch die Isolierwirkung der Anschlussisolierung (7) durch erhöhte Temperatur verringerbar oder zerstörbar ist.

3. Lithium-Ionen-Akkumulator (1) nach Anspruch 1, **dadurch gekennzeichnet, dass** bei dem Lithium-Ionen-Akkumulator (1) das Heizelement ein Heizdraht ist, der vorzugsweise in die Anschlussisolierung (7) eingebettet ist.

4. Lithium-Ionen-Akkumulator (1) nach Anspruch 1, **dadurch gekennzeichnet, dass** bei dem Lithium-Ionen-Akkumulator (1) der Kunststoff ab einer vordefinierten Temperatur schmelzbar oder auflösbar ist oder sein Zerfall auslösbar oder der Kunststoff ab einer vordefinierten Temperatur anderweitig zerstörbar oder chemisch veränderbar ist.

5. Verfahren zur Verringerung der Gefährdung durch einen Lithium-Ionen-Akkumulator (1) nach einem vorangehendem Ansprüche, **dadurch gekennzeichnet, dass** nach einer Verringerung der Isolationswirkung der Trennschicht oder bei einem Ausgasen der Trennschicht die Isolierwirkung der Anschlussisolierung (7) verringert und eine elektrische Verbindung zwischen den Elektroden hergestellt wird, um den Lithium-Ionen-Akkumulator (1) über diese elektrische Verbindung zu entladen,wobei die Isolierwirkung der Anschlussisolierung (7) durch eine Temperatureinwirkung auf die Anschlussisolierung (7) verringert wird, wobei die Einwirkung in Folge der Verringerung der Isolationswirkung der Trennschicht entsteht.

## Claims

1. Lithium-ion rechargeable battery (1) comprising a first electrode and a second electrode, which are separated from one another by means of an electrically insulating separating layer through which ions can penetrate,
wherein the first electrode is electrically connected to an electrode connection (6), which is electrically insulated from the second electrode by means of a connection insulation (7),
wherein upon a reduction of the insulation effect of the separating layer, the insulation effect of the connection insulation (7) is also able to be reduced or able to be destroyed and, as a result, an electrical connection between the first electrode and the second electrode is able to be produced via the electrode connection (6), such that the lithium-ion rechargeable battery (1) is able to be discharged via this electrical connection, **characterized in that**
in the case of the lithium-ion rechargeable battery (1) the insulation effect of the connection insulation (7) is able to be reduced or able to be destroyed by means of a heating element,
wherein in the case of the lithium-ion rechargeable battery (1) the connection insulation (7) comprises a plastic as insulating material,
wherein the lithium-ion rechargeable battery (1) has a housing (3), which is electrically conductive at least in sections and in the interior of which the first and second electrodes are arranged, wherein the second electrode is electrically conductively connected to the housing (3) via an electrical connector (4) and the electrode connection (6) extends from the interior of the housing (3) as far as the exterior of the housing (3), wherein the electrode connection (6) is electrically insulated from the housing by means of the connection insulation (7),
wherein the lithium-ion rechargeable battery (1) has a sensor for detecting the reduction of the insulation effect of the separating layer or outgassing of the separating layer,
wherein the lithium-ion rechargeable battery has a cell monitoring device, wherein the cell monitoring device is configured to evaluate the sensor.

2. Lithium-ion rechargeable battery (1) according to Claim 1, **characterized in that** in the case of the lithium-ion rechargeable battery (1), by means of a consequence of the reduction of the insulation effect of the separating layer, in particular outgassing of the separating layer, the insulation effect of the connection insulation (7) is also able to be reduced or able to be destroyed by increased temperature.

3. Lithium-ion rechargeable battery (1) according to Claim 1, **characterized in that** in the case of the lithium-ion rechargeable battery (1) the heating element is a heating wire, which is preferably embedded into the connection insulation (7).

4. Lithium-ion rechargeable battery (1) according to Claim 1, **characterized in that** in the case of the lithium-ion rechargeable battery (1) the plastic is fusible or decomposable starting from a predefined temperature or its decomposition is triggerable or the plastic is otherwise able to be destroyed or chemically alterable starting from a predefined temperature.

5. Method for reducing the endangerment resulting from a lithium-ion rechargeable battery (1) according to any of the preceding claims, **characterized in that** after a reduction of the insulation effect of the separating layer or upon outgassing of the separating layer, the insulation effect of the connection insulation (7) is reduced and an electrical connection between the electrodes is produced in order to discharge the lithium-ion rechargeable battery (1) via this electrical connection, wherein the insulation effect of the connection insulation (7) is reduced by a temperature influence on the connection insulation (7), wherein the influence arises on account of the reduction of the insulation effect of the separating layer.

## Revendications

1. Accumulateur lithium-ions (1), comprenant une première électrode et une deuxième électrode qui sont séparées l'une de l'autre au moyen d'une couche de séparation électriquement isolante et pouvant être traversée par les ions,
la première électrode étant reliée électriquement à une borne d'électrode (6) qui est isolée électriquement de la deuxième électrode au moyen d'une isolation de borne (7),
dans le cas d'une réduction de l'effet isolant de la couche de séparation, l'effet isolant de l'isolation de borne (7) pouvant également être réduit ou annihilé et une liaison électrique entre la première électrode et la deuxième électrode pouvant ainsi être établie par le biais de la borne d'électrode (6), de sorte que l'accumulateur lithium-ions (1) peut être déchargé par le biais de cette liaison électrique,
**caractérisé en ce que**
avec l'accumulateur lithium-ions (1), l'effet isolant de l'isolation de borne (7) peut être réduit ou annihilé au moyen d'un élément chauffant,
l'isolation de borne (7) sur l'accumulateur lithium-ions (1) comportant une matière plastique en tant que matériau isolant,
l'accumulateur lithium-ions (1) possédant un boîtier (3) électriquement conducteur au moins dans certaines portions, à l'intérieur duquel sont disposées la première et la deuxième électrode, la deuxième électrode étant reliée de manière électriquement conductrice au boîtier (3) par le biais d'un connecteur électrique (4) et la borne d'électrode (6) s'étendant depuis l'intérieur du boîtier (3) jusqu'à l'extérieur du boîtier (3), la borne d'électrode (6) étant isolée électriquement du boîtier au moyen de l'isolation de borne (7),
l'accumulateur lithium-ions (1) possédant un capteur destiné à détecter la réduction de l'effet isolant de la couche de séparation ou un dégagement gazeux de la couche de séparation,
l'accumulateur lithium-ions possédant un dispositif de surveillance de cellule, le dispositif de surveillance de cellule étant conçu pour analyser le capteur.

2. Accumulateur lithium-ions (1) selon la revendication 1, **caractérisé en ce qu'**avec l'accumulateur lithium-ions (1), l'effet isolant de l'isolation de borne (7) peut également être réduit ou annihilé par une température accrue au moyen d'un impact de la réduction de l'effet isolant de la couche de séparation, notamment d'un dégagement gazeux de la couche de séparation.

3. Accumulateur lithium-ions (1) selon la revendication 1, **caractérisé en ce qu'**avec l'accumulateur lithium-ions (1), l'élément chauffant est un fil chauffant qui est de préférence incorporé dans l'isolation de borne (7).

4. Accumulateur lithium-ions (1) selon la revendication 1, **caractérisé en ce qu'**avec l'accumulateur lithium-ions (1), à partir d'une température prédéfinie, la matière plastique peut fondre ou peut se détacher ou sa décomposition peut être déclenchée, ou alors, à partir d'une température prédéfinie, la matière plastique peut être détruite d'une autre manière ou modifiée chimiquement.

5. Procédé pour réduire le risque posé par un accumulateur lithium-ions (1) selon l'une des revendications précédentes, **caractérisé en ce qu'**après une réduction de l'effet isolant de la couche de séparation ou dans le cas d'un dégagement gazeux de la couche de séparation, l'effet isolant de l'isolation de borne (7) est réduit et une liaison électrique est établie entre les électrodes afin de décharger l'accumulateur lithium-ions (1) par le biais de cette liaison électrique, l'effet isolant de l'isolation de borne (7) étant réduit par une influence thermique sur l'isolation de borne (7), l'influence se produisant en conséquence de la réduction de l'effet isolant de la couche de séparation.
